Europäisches Patentamt

European Patent Office

Office européen des brevets

(11) Publication number: **0 315 076 B1**

## EUROPEAN PATENT SPECIFICATION

(45) Date of publication of patent specification: **16.09.92**   (51) Int. Cl.⁵: **F16F 7/08**, D06F 37/20

(21) Application number: **88118018.6**

(22) Date of filing: **28.10.88**

(54) Vibration dampening device for a laundry washing machine.

(30) Priority: **04.11.87 IT 3406187 U**

(43) Date of publication of application:
**10.05.89 Bulletin  89/19**

(45) Publication of the grant of the patent:
**16.09.92 Bulletin  92/38**

(84) Designated Contracting States:
**AT BE DE ES FR GB IT SE**

(56) References cited:
**EP-A- 0 217 234**
**DE-A- 2 812 904**
**DE-U- 8 508 931**

(73) Proprietor: **INDUSTRIE ZANUSSI S.p.A.**
**Via Giardini Cattaneo 3**
**I-33170 Pordenone(IT)**

(72) Inventor: **Lorenzetti, Luciano**
**Via Papa Giovanni XXIII 14**
**I-33808 Porcia Pordenone(IT)**
Inventor: **Durazzani, Piero**
**Via Lazio 7**
**I-33080 Porcia Pordenone(IT)**

(74) Representative: **Patentanwälte Grünecker,**
**Kinkeldey, Stockmair & Partner**
**Maximilianstrasse 58**
**W-8000 München 22(DE)**

## Description

The present invention relates to a vibration dampening device for supporting the tub and drum assembly in a laundry washing machine, said device being designed to permit said assembly to be mounted in the housing of the machine in a simplified manner.

As generally known, the tub and drum assembly of conventional laundry washing machines is supported in the housing of the machine by means of suspension springs and vibration dampeners engaging the assembly from above and from below, respectively.

Known vibration dampening devices substantially comprise a metal plunger of elongate cylindrical shape reciprocatingly slidable in a metal envelope likewise of cylindrical shape having its lower end pivotally connected to the bottom of the laundry washing machine by means of a bolt, the plunger being provided with braking surfaces of a suitable low-friction material cooperating with the corresponding cylindrical interior surfaces of the envelope, and having its free end pivotally connected to a metal bracket secured to the bottom surface of the tub and drum assembly of the laundry washing machine.

The described vibration dampening devices are also of a construction preventing the plunger from being completely withdrawn from the cylindrical envelope while being reciprocatingly slidable therein as a result of the vibrations of the tub and drum assembly during operation of the laundry washing machine.

In any case, vibration dampening devices of this type are of a rather complicated construction requiring quite a number of difficult operations for mounting them in a laundry washing machine.

As a matter of fact, the mounting of these devices can only be carried out manually by first connecting the plunger to the tub and drum assembly in the manner described above, and by subsequently connecting the free end of the cylindrical envelope to the bottom wall of the housing of the machine after the tub and drum assembly has been placed in the housing.

EP-A-0 217 234 describes a vibration dampening device substantially comprising a plunger and an envelope of cylindrical shape, which are separable from one another and made of a plastics material, said plunger being slidable within said envelope for obtaining a braking effect.

The free end portions of the plunger and the envelope of these vibration dampening devices are formed with respective through-openings for the insertion of bolts for connecting the plunger and envelope, respectively, to corresponding brackets provided at the lower portion of the tub and drum assembly and on the bottom wall of the housing of the machine.

Although these vibration dampening devices ensure effective dampening of the vibrations of the tub and drum assembly, their effectivity is apt to degrade after extended operation of the laundry washing machine due to their being heated to excessive temperatures as the result of the friction produced by the displacement of the plunger in the envelope of the device.

When a vibration dampening device of this type is made of a plastics material, the friction heat may cause a softening of the material, rendering the operation of the vibration dampening device unsatisfactory and unreliable. This disadvantage could be avoided by making the vibration dampening devices of a thermosetting material; in this case, however, the manufacture of these devices becomes rather inconvenient in view of the high cost of these materials.

It is therefore an object of the present invention to provide a vibration dampening device of a construction permitting the disadvantages outlined above to be avoided while on the other hand ensuring efficient dampening of the vibrations of the tub and drum assembly and permitting the device to be mounted in the housing of a respective machine by a simple and fully automatized operation.

This is achieved by a vibration dampening device as defined in claim 1.

The advantages offered by the invention are mainly that the dampening device is easy to manufacture, needs less plastics material, is more reliable and provides for an efficient cooling.

The characteristics of the invention will become more clearly evident from the following description, given by way of example with reference to the accompanying drawings, wherein:

Fig. 1 shows a diagrammatical partially sectioned view of a vibration dampening device according to the invention as mounted in a laundry washing machine, and

Fig. 2 shows an elevational view of the vibration dampening device of Fig. 1.

With reference to the figures, there is shown a vibration dampening device 3 according to the invention adapted to support from below the tub and drum assembly (not shown) of a conventional laundry washing machine.

Vibration dampening device 3 substantially comprises a metal envelope 4 of elongate cylindrical shape, and a plunger 5 of a plastic material, likewise of elongate shape, adapted to reciprocatingly slide within envelope 4, the free end portions 6 and 7 of the envelope and plunger being pivotally connected to respective mounting portions (not shown) formed on a plastic bracket 8 formed integrally with a bottom wall 9 of the housing of the machine, and on an annular hoop 10, respectively, releasably secured and conforming to the outer periphery 11 of the tub of the laundry washing machine. In particular, the free end portions 6 and 7 are pivotally connected to the corresponding mounting portions by respective bolts 12 made of a plastic material.

Adjacent its other end plunger 5 is provided with annular braking surfaces 13 of a suitable low-friction material mounted in corresponding seats 14 formed in the outer peripheral surface of plunger 5 so as to cooperate with the interior wall surface of envelope 4.

The cylindrical metal envelope 4 is separable from plunger 5 and has one open end for permitting the plunger to be inserted into envelope for sliding displacement therein.

The present vibration dampening device additionally comprises a rigid support structure 15 made of a plastic material tightly fitted on cylindrical metal envelope 4 over its full length, prferably by injection-molding the plastic material about the metal envelope.

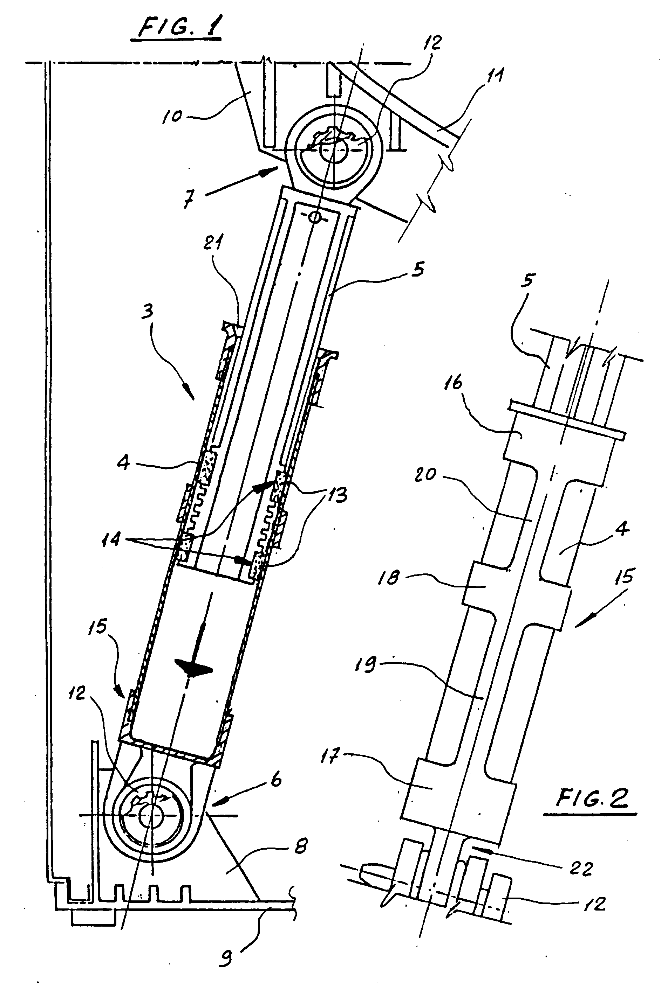

In particular, support structure 15 is formed in one piece by injection-molding the plastic material about the outer surface of envelope 4 adjacent the ends thereof and at a central location so as to form three annular portions 16, 17, 18 (cf. Fig. 2), and on parts of the remaining surface of the envelope so as to form a number of substantially rectangular webs 19, 20 disposed at spaced locations on the surface and connected to annular portions 16, 17 and 18.

Annular portion 16 defines an opening 21 coincident with that of envelope 4, this opening 21 being flared so as to present a slightly larger diameter than plunger 5 to thereby facilitate its insertion into envelope 4.

Annular portion 17 on its part defines a bottom closure of envelope 4 and at the same time acts as the free end 6 thereof for connection to the mounting portion of bracket 8 as described above. To this purpose the bottom closure, i.e. annular portion 17, is provided with a lug 22 of reduced width having an opening for the respective pivot bolt 12 to pass therethrough (cf. fig. 2).

The advantages obtainable by the vibration dampening device according to the invention are thus fully evident. This device is in fact highly effective in dampening the vibrations of the tub and drum assembly of the machine, and the presence of the metal envelope 4 incorporated in the support structure 15 ensures satisfactory and reliable operation of the device even for extended periods of use, thanks to the fact that the high temperatures produced by friction between the plunger 5 and the envelope 4 will not result in any deformation of the envelope itself.

In addition, the present vibration dampening device is of a simple and economically convenient construction permitting it to be readily mounted in a laundry washing machine by the insertion of bolts or similar elements at both ends of the device by a rapid and automatized operation.

Thanks to the fact, finally, that the envelope and the plunger of the vibration dampening device are separable from one another, it is possible to mount these components by a completely automatized operation during assembly of the laundry washing machine to thereby eliminate the manual operations formerly required for mounting devices of this type.

## Claims

1. A vibration dampening device for the support from below of the tub and drum assembly in a laundry washing machine, comprising an envelope (4), preferably of cylindrical shape, and an elongate plunger (5) of a plastic material separable from said envelope (4) and reciprocatingly slidable therein, the free ends of said envelope (4) and said plunger (5) being provided with openings to receive pivot bolts (12), said plunger (5) being further provided with braking surfaces (13) of a suitable low-friction material cooperating with the corresponding interior wall surface of said envelope (4),

   **characterized in that**

   the envelope (4) is made of metal, the device further comprising a rigid support structure (15) of a plastic material tightly fitted about said envelope (4) over its full length, preferably by injection-molding said plastic material thereon, said support structure (15) being provided with an open end (21) for the insertion of said plunger (5) into said envelope (4), and with a closure end portion (17) with the opening to receive the pivot bolt (12), and

   **that** rigid support structure (15) is composed of a number of annular portions (16,17,18) extending completely around the outer surface of said envelope (4) adjacent its two end portions and at an intermediate location, and a number of substantially rectangular web portions (19,20) spaced along said outer surface and connected to said annular portions (16,17,18).

2. A vibration dampening device according to claim 1, **characterized in that** said annular portion (17) acting as said end closure of said envelope (4) is provided with a lug (22) of reduced width formed with the opening for the pivot bolt (12)

## Patentansprüche

1. Vibrations-Dämpfungseinrichtung für die untere Abstützung der Wannen- und Trommeleinheit in einer Waschmaschine, mit einer Hülse (4), vorzugsweise von zylindrischer Form, und einem länglichen Kolben (5), der von der Hülse (4) trennbar und darin hin- und herbewegbar ist und aus Kunststoffmaterial besteht, wobei die freien Enden der Hülse (4) und des Kolbens (5) mit Öffnungen versehen sind, um Drehbolzen (12) aufzunehmen, wobei der Kolben (5) ferner mit Bremsflächen (13) von geeignetem Material mit niedriger Reibung versehen ist und die Bremsflächen mit der entsprechenden Innenwand der Hülse (4) zusammenarbeiten,
**dadurch gekennzeichnet, daß**
die Hülse (4) aus Metall gefertigt ist, die Einrichtung weiterhin eine starre Stützstruktur (15) aus Kunststoffmaterial aufweist, die die Hülse (4) eng anliegend auf ihre volle Länge umgibt, vorzugsweise, daß das Kunststoffmaterial durch Spritzgußverfahren aufgebracht ist, daß die Stützeinrichtung (15) mit einem offenen Ende (21) versehen ist, um den Kolben (5) in die Hülse (4) einzuführen und ferner mit einem verschlossenen Endteil (17) mit der Öffnung, um den Drehbolzen (12) aufzunehmen, und daß die starre Stützstruktur (15) aus mehreren Ringteilen (16, 17, 18) besteht, die sich vollständig um die Außenfläche der Hülse (4) erstrecken und benachbart zu den Endteilen und in einer dazwischen angeordneten Lage angeordnet sind und weiterhin mehrere im wesentlichen rechteckige Stegteile (19, 20) aufweisen, die sich entlang der Außenfläche erstrecken und sich an die Ringteile (16, 17, 18) anschließen.

2. Vibrations-Dämpfungseinrichtung nach Anspruch 1, **dadurch gekennzeichnet, daß** das Ringteil (17), das als Endverschluß der Hülse (4) dient, mit einem Fortsatz (22) von reduziertem Querschnitt versehen ist, in dem die Öffnung für den Drehbolzen (12) ausgebildet ist.

## Revendications

1. Dispositif amortisseur de vibrations pour supporter d'en dessous l'ensemble de la cuve et du tambour d'un lave-linge, comprenant une enveloppe (4), de préférence de forme cylindrique, et un plongeur allongé (5) en matière plastique, séparable de l'enveloppe (4) et pouvant y coulisser dans les deux sens, les extrémités libres de l'enveloppe (4) et du plongeur (5) comportant des ouvertures pour recevoir des boulons de pivotement (12), le plongeur comportant en outre des surfaces de freinage (13) en un matériau à faible coefficient de frottement approprié coopérant avec la surface de la paroi intérieure correspondante de l'enveloppe (4),
caractérisé en ce que
l'enveloppe (4) est fabriquée en métal, le dispositif comprenant en outre une structure support rigide (15) en matière plastique étroitement montée autour de l'enveloppe (4) sur toute sa longueur, de préférence en moulant par injection sur l'enveloppe la matière plastique, cette structure support (15) ayant une extrémité ouverte (21) pour l'introduction du plongeur (5) dans l'enveloppe (4), et une portion terminale de fermeture (17) avec l'ouverture pour recevoir le boulon de pivotement (12) et en ce que
la structure support rigide (15) comporte un certain nombre de portions annulaires (16,17,18) s'étendant complètement autour de la surface extérieure de l'enveloppe (4) au voisinage de ses deux portions terminales et en un emplacement intermédiaire, et un certain nombre de portions de nervures pratiquement rectangulaires (19,20) espacées le long de cette surface extérieure et se raccordant aux portions annulaires (16,17,18).

2. Dispositif amortisseur de vibrations selon la revendication 1, caractérisé en ce que la portion annulaire (17), servant de fermeture terminale pour l'enveloppe (4), comporte une oreille (22) de largeur réduite formée avec l'ouverture pour le boulon de pivotement (12).

FIG. 1

FIG. 2